# EUROPÄISCHE PATENTSCHRIFT

(11) **EP 4 281 302 B1**
(45) Veröffentlichungstag und Bekanntmachung des Hinweises auf die Patenterteilung: **02.10.2024**
(21) Anmeldenummer: 21823206.4
(22) Anmeldetag: 25.11.2021
(51) Int. Cl.: B60H 1/34

(54) **LUFTAUSSTRÖMVORRICHTUNG ZUR ZUFÜHRUNG VON TEMPERIERTER LUFT FÜR EINEN INNENRAUM EINES KRAFTFAHRZEUGS**
AIR DISCHARGE DEVICE FOR SUPPLYING TEMPERATURE-CONTROLLED AIR FOR AN INTERIOR OF A MOTOR VEHICLE
DISPOSITIF DE REFOULEMENT D'AIR POUR ALIMENTER EN AIR RÉGULÉ EN TEMPÉRATURE UN HABITACLE D'UN VÉHICULE À MOTEUR

(30) Priorität: 19.01.2021 DE 102021000255
(43) Veröffentlichungstag der Anmeldung: 29.11.2023
(73) Patentinhaber: Mercedes-Benz Group AG, 70372 Stuttgart (DE)
(72) Erfinder: CURRLE, Joachim, 70327 Stuttgart (DE)
(74) Vertreter: Novagraaf Group
(86) Internationale Anmeldenummer: PCT/EP2021/083059
(87) Internationale Veröffentlichungsnummer: WO 2022/156941

(56) Entgegenhaltungen:
- DE-A1- 102015 000 874
- DE-U1- 202009 005 243
- JP-A- S57 148 132
- US-A1- 2019 077 218

## Beschreibung

Die Erfindung betrifft eine Luftausströmvorrichtung zur Zuführung von temperierter Luft für einen Innenraum eines Kraftfahrzeugs gemäß dem Oberbegriff von Patentanspruch 1.

Aus dem Stand der Technik sind bereits Luftausströmvorrichtungen für einen Innenraum von Kraftfahrzeugen bekannt. Diese sind zum Ausströmen von temperierter Luft für einen Insassen ausgebildet. Hierzu können beispielsweise Lamellen innerhalb der Luftausströmöffnung ausgebildet sein, wodurch eine Richtung der Luftströmung durch einen Insassen eingestellt werden kann.

Die DE 10 2015 000 874 A1 betrifft einen Luftausströmer für einen Fahrgastraum eines Kraftwagens. Der Luftausströmer weist einen zylinderrohrförmigen Lamellenträger mit schwenkbar in ihm gelagerten Lamellen auf. Mit einem elektromotorischen Antrieb ist der Lamellenträger mit den Lamellen drehend antreibbar. Ein axial verschieblicher Stellring auf dem Lamellenträger ermöglicht ein Schwenken der Lamellen in jeder beliebigen Drehstellung des Lamellenträgers. Über einen Stellschieber verschiebt eine Steuerkurve auf einem Zylinder den Stellring axial. Der Antrieb des Zylinders erfolgt ebenfalls mit dem elektromotorischen Antrieb der wahlweise auf ein Zahnrad zum Drehen des Lamellenträgers oder den Zylinder mit Steuerkurve umschaltbar ist.

Die DE 20 2009 005 243 U1 zeigt eine Runddüse zum Leiten von Luftströmen, insbesondere in Heizungs-, Klima- und Belüftungsanlagen in Kraftfahrzeugen, mindestens aufweisend ein Gehäuse mit mindestens einer zylinderförmigen Öffnung mit daran befestigten Luftableitscheiben, einem Stellring zum Verstellen der Luftableitscheiben, der an der Öffnungswand des Gehäuses drehbar gelagert ist, dadurch gekennzeichnet, dass als Luftableitmittel mindestens zwei Luftableitscheiben vorgesehen sind, die an einer Achse oder einer Welle fest oder in Längsrichtung der Achse oder Welle auslenkbar, symmetrisch oder asymmetrisch zueinander verdrehsicher angeordnet sind, wobei die Luftableitscheiben eine solche Kontur aufweisen, dass durch Drehen der Welle um die Längsachse oder durch Drehen des Stellrings mit der quer eingesetzten Achse die Luftableitscheiben verschiedene Ableitstellungen gegenüber der Längsachse der Achse oder Welle und/oder des Gehäuses einnehmen und verschiedene Strömungsablenkungen bewirken.

Aus der US 2019 / 077 218 A1 ist ein System zur Steuerung des Luftstroms einer Heizungs-, Lüftungs- und Klimaanlage (HLK) bekannt. Das System umfasst ein Register mit Luftstromrichtungen. Ein Motor ist an das Register angeschlossen, um die Richtungen zu bewegen. Ein Richtungswähler ist an den Motor angeschlossen, um den Motor zu steuern. Die Betätigung des Richtungswählers durch einen Benutzer ändert die Position der Richtungswahlschalter. Ein Steuermodul speichert vorbestimmte Positionen der Richtungen und steuert den Motor, um die Richtungen als Reaktion auf den Empfang eines Benutzerbefehls in die vorbestimmten Positionen zu bewegen.

Weiterer relevanter Stand der Technik ist der JP S57 143182 A entnehmbar.

Aufgabe der vorliegenden Erfindung ist es, eine Luftausströmvorrichtung zu schaffen, mittels welcher eine verbesserte Zuführung von temperierter Luft für einen Insassen eines Kraftfahrzeugs realisiert werden kann.

Diese Aufgabe wird durch eine Luftausströmvorrichtung gemäß dem unabhängigen Patentanspruch 1 gelöst. Vorteilhafte Ausgestaltungsformen sind in den Unteransprüchen angegeben.

Ein Aspekt der Erfindung betrifft eine Luftausströmvorrichtung zur Zuführung von temperierter Luft für einen Innenraum eines Kraftfahrzeugs, mit zumindest einem elektrischen Stellmotor und mit einem drehbar gelagerten Rotationsring, wobei der Rotationsring in einem Innenbereich des Rotationsrings verstellbare Lamellen aufweist. Es ist vorgesehen, dass die Luftausströmvorrichtung eine ortsfeste Kulissenführung aufweist, in welcher ein Zapfen des Rotationsrings eingreift, wobei der Zapfen mit den Lamellen verbunden ist, sodass durch eine Drehung des Rotationsrings eine Verstellung der Lamellen realisiert ist.

Insbesondere ist somit eine aktuatorische Runddüse zur Zuführung von klimatisierter Luft in einen Fahrzeuginnenraum vorgesehen. Mithilfe des elektrischen Stellmotors, welcher insbesondere ein Schrittmotor ist, kann der Rotationsring mit an diesem drehbar gelagerten angebrachten Lamellen in einem Düsengehäuse zur Einstellung beliebiger Luftaustrittsrichtungen gedreht werden. Hierzu wird über einen Hebel und eine entsprechende Steuerscheibe ein Zapfen, geführt der die Schwenkbewegung durchführt. Wenn der Zapfen in der Kulissenführung sich bewegt hat, wird die Neigung der Lamellen einmal von Minimum nach Maximum und wieder zurück nach Minimum verstellt. Gleichzeitig wird der Rotationsring ein Stück weitergedreht. Weiterhin ist der Zapfen mit dem Hebel gekoppelt, welcher mit dem Rotationsring drehbar gelagert ist und der Hebel zum Verstellen der Lamellen ausgebildet ist.

Gemäß einer vorteilhaften Ausgestaltungsform ist die Kulissenführung sternförmig ausgebildet.

In einer weiteren vorteilhaften Ausgestaltungsform ist der Rotationsring mittels zumindest einer Strebe mit einer Rotationsachse verbunden, wobei die Rotationsachse mit dem elektrischen Stellmotor über zumindest ein Zahnrad verbunden ist. Ferner hat es sich als vorteilhaft erwiesen, wenn die Luftausströmvorrichtung ein Potentiometer aufweist, wobei das Potentiometer zum Speichern einer Stellung des Rotationsrings und der Lamellen ausgebildet ist.

Ein weiterer Aspekt der Erfindung betrifft ein Kraftfahrzeug mit einer Luftausströmvorrichtung gemäß dem vorhergehenden Aspekt. Das Kraftfahrzeug ist insbesondere als Personenkraftwagen ausgebildet.

Vorteilhafte Ausgestaltungsformen der Luftausströmvorrichtung sind als vorteilhafte Ausgestaltungsformen des Kraftfahrzeugs anzusehen.

Weitere Vorteile und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar.

Dabei zeigen:
- Fig. 1: eine schematische Frontansicht einer Ausführungsform einer Luftausströmvorrichtung; und
- Fig. 2: eine schematische Perspektivansicht einer Rückseite der Luftausströmvorrichtung gemäß Fig. 1.

In den Fig. sind gleiche oder funktionsgleiche Elemente mit den gleichen Bezugszeichen versehen.

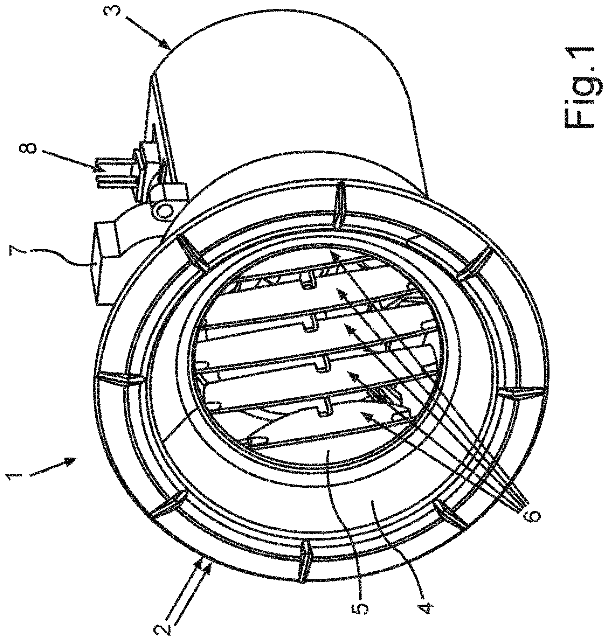

Fig. 1 zeigt eine schematische Frontansicht einer Ausführungsform einer Luftausströmvorrichtung 1. Die Luftausströmvorrichtung 1 weist eine Blende 2 auf. Ferner weist die Luftausströmvorrichtung 1 ein Düsengehäuse 3 sowie einen Trichter 4 auf. Fig. 1 zeigt ferner, dass die Luftausströmvorrichtung 1 einen Rotationsring 5 sowie verstellbare Lamellen 6, welche auch als Lamellenpaket bezeichnet werden können, aufweist. Ferner weist die Luftausströmvorrichtung 1 einen elektrischen Stellmotor 7, welcher auch als Schrittmotor bezeichnet werden kann, sowie ein Potentiometer 8 auf.

Die Luftausströmvorrichtung 1 ist zur Zuführung von temperierter Luft für einen Innenraum eines nicht gezeigten Kraftfahrzeugs ausgebildet.

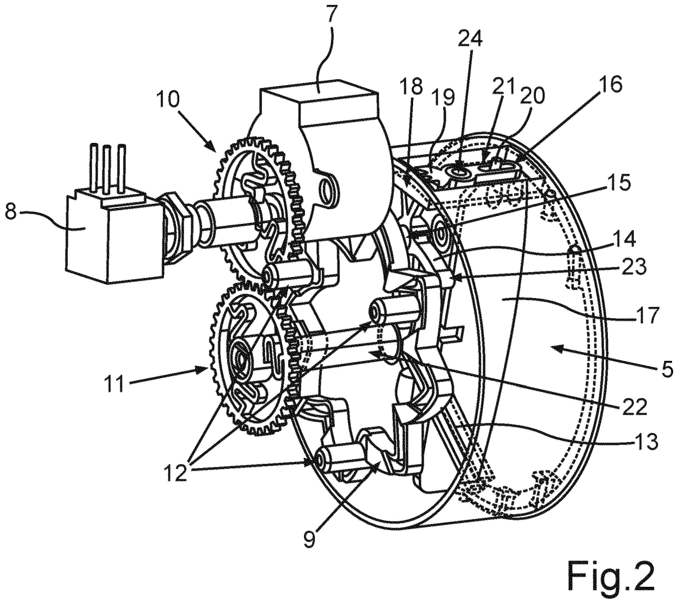

Fig. 2 zeigt eine schematische Perspektivansicht einer Rückseite der Luftausströmvorrichtung 1. Vorliegend ist insbesondere gezeigt, dass die Luftausströmvorrichtung 1 ferner eine ortsfeste Kulissenführung 9 aufweist, welche auch als Steuerscheibe bezeichnet werden kann. Ferner weist die Luftausströmvorrichtung 1 ein treibendes Zahnrad 10 sowie ein getriebenes Zahnrad 11 und einen Zapfen 12 auf. Ferner ist vorgesehen, dass die Luftausströmvorrichtung 1 Streben 13 sowie einen Hebel 14 zum Bewegen einer Steuerkurve aufweist. Ferner ist vorgesehen, dass die Luftausströmvorrichtung 1 einen weiteren Zapfen 15 und einen Hebel 16 für eine Steuerlamelle 17 aufweist. Ferner weist die Luftausströmvorrichtung 1 ein erstes Zahnsegment 18, ein zweites Zahnsegment 19 sowie einen Steuerzapfen 20 auf. Ferner ist gezeigt, dass die Luftausströmvorrichtung 1 einen Steuerzapfen 20, ein Langloch 21, eine Rotationsachse 22, einen Führungsstift, der ebenfalls als Zapfen 23 bezeichnet werden kann, sowie eine Drehachse 24 aufweist.

Fig. 2 zeigt insbesondere, dass die Luftausströmvorrichtung 1 zur Zuführung von temperierter Luft für einen Innenraum des Kraftfahrzeugs ausgebildet ist. Hierzu weist die Luftausströmvorrichtung 1 den elektrischen Stellmotor 7 auf und der drehbar gelagerten Rotationsring 5. Der Rotationsring 5 ist in einem Innenbereich des Rotationsrings 5 mit den verstellbaren Lamellen 6 gekoppelt.

Die Luftausströmvorrichtung 1 weist die ortsfeste Kulissenführung 9 auf, in welche der Zapfen 23 mit den Lamellen 6 verbunden ist, sodass durch eine Drehung des Rotationsrings 5 eine Verstellung der Lamellen 6 realisiert ist. Die Kulissenführung 9 ist insbesondere sternförmig ausgebildet. Ferner ist der Zapfen 23 mit dem Hebel 14 zum Verstellen der Lamellen 6 ausgebildet. Der Rotationsring 5 kann mittels der Streben 13 mit der Rotationsachse 22 verbunden sein, wobei die Rotationsachse 22 mit dem elektrischen Stellmotor 7 über zumindest eines der Zahnräder 10, 11 verbunden ist. Ferner ist gezeigt, dass die Luftausströmvorrichtung 1 das Potentiometer 7 aufweist, wobei das Potentiometer 8 zum Speichern einer Stellung des Rotationsrings 5 und der Lamellen 6 ausgebildet ist.

Insbesondere ist somit gezeigt, dass auf Basis des elektrischen Stellmotors 7 eine manuelle Bedienung durch einen Nutzer entfallen kann. Ein Insasse kann die für ihn optimale Luftausströmrichtung durch beispielsweise Sprachbedienung oder auf einem Touchscreen einfach einstellen. Eine bevorzugte Düsenposition kann individuell gespeichert und wieder abgerufen werden. Zudem lassen sich aktuatorische Düsen, wie die Luftausströmvorrichtung 1, in die Klimaregelung einbinden. Insgesamt ergibt sich damit eine Individualisierung und Verbesserung des thermischen Komforts für einen Insassen. Zudem wird die im aus der Luftausströmvorrichtung 1 ausströmenden Luftstrom enthaltene Klimatisierungsenergie, beispielsweise Warm- oder Kaltluft, effizienter zum Insassen gebracht, wodurch Energie zur Klimatisierung des Fahrzeuginnenraums eingespart werden kann.

Die Lösung besteht insbesondere durch die vorgestellte Luftausströmvorrichtung 1, die lediglich den elektrischen Stellmotor 7 benötigt, um beliebig beziehungsweise eine begrenzte Anzahl von diskreten Ausströmrichtungen der austretenden Luft einzustellen. Dies führt zu einer deutlichen Kostensenkung wie bei Lösungen, bei denen mit einem Schrittmotor die vertikale Ablenkung und mit einem weiteren Schrittmotor die horizontale Ablenkung der Luft bewerkstelligt wird. In den Eintrittsbereich der Luftausströmvorrichtung 1 wird klimatisierte Luft aus der Heizungs- und Klimaanlage des Fahrzeugs eingeströmt, indem der elektrische Stellmotor 7 und das Potentiometer 8 in dem dargestellten Kinematikelement untergebracht sind. Im Düsengehäuse 3 kann mittels des elektrischen Stellmotors 7 der Rotationsring 5, in dem die Lamellen 6 gelagert sind, gedreht werden. Durch diese Drehung sowie der Auslenkung der Lamellen 6 des Lamellenpakets können beliebige Ausströmrichtungen der Luft realisiert werden. Im vorderen Bereich der Luftausströmvorrichtung 1 befinden sich der Trichter 4 und die Blende 2, die mit einer Instrumententafel des Kraftfahrzeugs verbunden ist.

Die in dem elektrischen Stellmotor 7 erzeugte Drehbewegung wird über das treibende Zahnrad 10 auf das getriebene Zahnrad 11 und über die Rotationsachse 22 auf den Rotationsring 5 übertragen. Die Rotationsachse 22 ist über die Streben 13 fest mit dem Rotationsring 5 verbunden. An einem Ende weist der Hebel 14 einen Führungsstift, welcher vorliegend dem Zapfen 23 entspricht, auf, der in der Kulissenführung 9 mit dem Düsengehäuse 3 verbunden ist, wobei dies jeweils insbesondere über die Zapfen 12 realisiert ist. Der Zapfen 23 greift dabei in die sternförmige Kulissenführung 9 ein. An seinem anderen Ende weist der Hebel 14 das Zahnsegment 18 auf, das im Eingriff mit dem Zahnsegment 19 des um die Achse 24 drehbar gelagerten Hebels 16 steht, durch den über den Steuerzapfen 20 die Steuerlamelle 17 und über einen Mitnehmer das gesamte Lamellenpaket, also die Lamellen 6, ausgelenkt werden. Der Steuerzapfen 20 bewegt sich dabei in dem Langloch 21 des Hebels 16. Das heißt, bei Drehung des durch den elektrischen Stellmotor 7 angetriebenen Rotationsrings 5 wird über die Hebel 14, 16 und den in der Kulissenführung 9 geführten Zapfen 23 gleichzeitig das Lamellenpaket abhängig von der Stellung des Zapfens 23 verschieden stark ausgelenkt. Durch das Potentiometer 8 ist die aktuelle Position der Kinematik nach Ausschalten der Spannungsversorgung gespeichert, sodass sich das System nach Wiedereinschalten von dieser Position aus weiter betreiben lässt.

Insgesamt zeigt die Fig. eine aktuatorische Runddüse.

## Patentansprüche

1. Luftausströmvorrichtung (1) zur Zuführung von temperierter Luft für einen Innenraum eines Kraftfahrzeugs, mit zumindest einem elektrischen Stellmotor (7) und mit einem drehbar gelagerten Rotationsring (5), wobei der Rotationsring (5) in einem Innenbereich des Rotationsrings (5) verstellbare Lamellen (6) aufweist, **dadurch gekennzeichnet, dass**
die Luftausströmvorrichtung (1) eine ortsfeste Kulissenführung (9) aufweist, in welche ein Zapfen (23) des Rotationsrings (5) eingreift, wobei der Zapfen (23) mit den Lamellen (6) verbunden ist, so dass durch eine Drehung des Rotationsrings (5) eine Verstellung der Lamellen (6) realisiert ist, wobei der Zapfen (23) mit einem Hebel (14) gekoppelt ist, welcher mit dem Rotationsring (5) drehbar gelagert ist, und der Hebel (14) zum Verstellen der Lamellen (6) ausgebildet ist.

2. Luftausströmvorrichtung (1) nach Anspruch 1,
**dadurch gekennzeichnet, dass**
die Kulissenführung (9) sternförmig ausgebildet ist.

3. Luftausströmvorrichtung (1) nach einem der vorhergehenden Ansprüche,
**dadurch gekennzeichnet, dass**
der Rotationsring (5) mittels zumindest einer Strebe (13) mit einer Rotationsachse (22) verbunden ist, wobei die Rotationsachse (22) mit dem elektrischen Stellmotor (7) über zumindest ein Zahnrad (10, 11) verbunden ist.

4. Luftausströmvorrichtung (1) nach einem der vorhergehenden Ansprüche,
**dadurch gekennzeichnet, dass**
die Luftausströmvorrichtung (1) ein Potentiometer (8) aufweist, wobei das Potentiometer (8) zum Speichern einer Stellung des Rotationsrings (5) und der Lamellen (6) ausgebildet ist.

## Claims

1. Air outlet device (1) for supplying temperature-controlled air for an interior of a motor vehicle, comprising at least one electric servomotor (7) and comprising a rotatably mounted rotation ring (5), the rotation ring (5) having adjustable slats (6) in an inner region of the rotation ring (5),
**characterized in that**
the air outlet device (1) has a stationary slide guide (9) into which a pin (23) of the rotation ring (5) engages, the pin (23) being connected to the slats (6) so that an adjustment of the slats (6) is realized by a rotation of the rotation ring (5), the pin (23) being coupled to a lever (14) which is rotatably mounted in relation to the rotation ring (5), and the lever (14) being designed to adjust the slats (6).

2. Air outlet device (1) according to claim 1,
**characterized in that**
the slide guide (9) is star-shaped.

3. Air outlet device (1) according to either of the preceding claims, **characterized in that**
the rotation ring (5) is connected to a rotation shaft (22) by means of at least one strut (13), the rotation shaft (22) being connected to the electric servomotor (7) via at least one gearwheel (10, 11).

4. Air outlet device (1) according to any of the preceding claims, **characterized in that**
the air outlet device (1) has a potentiometer (8), the potentiometer (8) being designed to store a position of the rotation ring (5) and the slats (6).

## Revendications

1. Dispositif de sortie d'air (1) pour l'amenée d'air tempéré pour un habitacle d'un véhicule automobile, comportant au moins un servomoteur électrique (7) et comportant un anneau rotatif (5) monté de manière à pouvoir tourner, dans lequel l'anneau rotatif (5) présente des lamelles (6) réglables dans une zone intérieure de l'anneau rotatif (5),
**caractérisé en ce que**
le dispositif de sortie d'air (1) présente un guide à coulisse (9) fixe dans lequel vient en prise un tourillon (23) de l'anneau rotatif (5), dans lequel le tourillon (23) est relié aux lamelles (6), de sorte qu'un réglage des lamelles (6) est réalisé par une rotation de l'anneau rotatif (5), dans lequel le tourillon (23) est accouplé à un levier (14) qui est monté de manière à pouvoir tourner avec l'anneau rotatif (5), et le levier (14) est conçu pour le réglage des lamelles (6).

2. Dispositif de sortie d'air (1) selon la revendication 1,
**caractérisé en ce que**
le guide à coulisse (9) est conçu en forme d'étoile.

3. Dispositif de sortie d'air (1) selon l'une des revendications précédentes, **caractérisé en ce que**
l'anneau rotatif (5) est relié à un axe de rotation (22) au moyen d'au moins une entretoise (13), dans lequel l'axe de rotation (22) est relié au servomoteur électrique (7) par l'intermédiaire d'au moins une roue dentée (10, 11).

4. Dispositif de sortie d'air (1) selon l'une des revendications précédentes, **caractérisé en ce que**
le dispositif de sortie d'air (1) présente un potentiomètre (8), dans lequel le potentiomètre (8) est conçu pour mémoriser une position de l'anneau rotatif (5) et des lamelles (6).
